# EUROPÄISCHE PATENTSCHRIFT

(11) **EP 0 375 879 B1**
(45) Veröffentlichungstag und Bekanntmachung des Hinweises auf die Patenterteilung: **24.11.1993**
(21) Anmeldenummer: 89119977.0
(22) Anmeldetag: 27.10.1989
(51) Int. Cl.: G01N 35/04

(54) **Vorrichtung zur Steuerung eines Sternrades zur Positionierung von Probenbehältern**
Device for controlling a star-shaped sample container positioning wheel
Dispositif pour commander une roue étoilée de positionnement de récipients à échantillons

(30) Priorität: 24.12.1988 DE 8816086 U
(43) Veröffentlichungstag der Anmeldung: 04.07.1990
(73) Patentinhaber: LABORATORIUM PROF. DR. RUDOLF BERTHOLD GmbH & Co. KG, 75323 Bad Wildbad (DE)
(72) Erfinder: Lohr, Willy, D-7547 Wildbad (DE)
(74) Vertreter: Frank, Gerhard, Dipl.-Phys.

(56) Entgegenhaltungen:
- DE-A- 3 623 601
- DE-U- 8 816 086
- US-A- 4 447 395
- PATENT ABSTRACTS OF JAPAN, Bd. 6, Nr. 79 (P-115)(957),18.Mai 82;& JP-A-57016361
- FEINWERKTECHNIK + MESSTECHNIK, Bd. 93, Nr. 7, 1985, DE;Seiten 369 - 371; R.H. DOLLWETZEL: "Eigenschaften und Anwendungen von Reflexlichtschranken"

## Beschreibung

Die Erfindung betrifft eine Vorrichtung zur Steuerung eines Sternrades zur exakten Positionierung von Probenbehältern, die in N umfangsseitig aufeinanderfolgenden Segmenten des Sternrades angeordnet und durch diese schrittweise nacheinander zur erwünschten Halteposition gefördert werden, mit einem Antriebsmotor, der das Sternrad beaufschlagt und der schrittweise gesteuert wird.

Solche Sternräder werden beispielsweise in der Meßtechnik eingesetzt, um eine Anzahl von Probenbehältern (Reagenzgläser) kettenförmig verschiedenen Verarbeitungsschritten zuzuführen und eine weitgehende Automatisierung dieser Verarbeitungsschritte zu ermöglichen (DE-OS 30 13 868). Eine solche automatische Abfolge von Verarbeitungsschritten, beispielsweise bei Durchführung einer Lumineszenzmessung, Zupipettierung von Flüssigkeiten usw., setzt voraus, daß der Antrieb dieses Sternrades so exakt steuerbar ist, daß eine präzise Positionierung jeweils eines Probengefäßes relativ zu der Vorrichtung erfolgen kann, mit deren Hilfe ein solcher Verfahrensschritt durchgeführt wird. Das Sternrad muß also in exakt definierten Winkelabständen und exakt definierter Position der geförderten Probengefäße für die Dauer des jeweiligen Verarbeitungs- oder Meßvorgangs angehalten werden. Wie dies zufriedenstellend zu erreichen sein könnte, ist der DE-OS 30 13 868 nicht entnehmbar.

Eine vergleichbare Problemstellung bei der präzisen Verarbeitung von Werkstücken ist der DE-OS 34 47 728 zu entnehmen, die dort gezeigte Vorrichtung ist zu diesem Zweck so ausgebildet, daß auf der Welle des zu positionierenden Werkstückes eine Steuerscheibe sich synchron mit dem Werkstück dreht und diese Steuerscheibe mit Hilfe einer Gabellichtschranke abgetastet wird.

Die Nachteile dieser vorbekannten Anordnung bestehen im wesentlichen darin, daß infolge der Friktion der einzelnen Bauteile untereinander und dadurch bedingt Schlupferscheinungen oder auch unsaubere Montage keine eindeutig definierte Zuordnung der Abtastmarkierung in der Steuerscheibe zu der entsprechend genau zu definierenden Position des Werkstückes gewährleistet ist. Eine Anwendung dieses Prinzips zur exakten Positionierung von Probenbehältern scheide daher aus. Es ist ferner allgemein bekannt (Veröffentlichung "Eigenschaften und Anwendungen von Reflexlichtschranken"von Dipl.-Ing. R.H. Dollwetzel, München, in"Feinwerktechnik & Mess technik"93,1985, 7, S. 369-371, (Fig. 5)), beispielsweise zur Detektierung der Zähne eines Zahnrades eine Reflexlichtschranke zu benutzen. Eine vergleichbare Anwendung einer Reflexlichtschranke zeigt auch die US-PS 4,204,115 zur Messung der Umfangsgeschwindigkeit der Scheibe eines Stromzählers.

Es handelt sich hierbei durchweg um die Messung kontinuierlich bewegter Objekte mittels einer Reflexlichtschranke; bei der gattungsgemäßen Vorrichtung handelt es sich jedoch um einen diskontinuierlichen, taktweisen Betrieb, bei dem für die exakte Positionierung der Probengefäße auch dynamische Einflüsse, insbesondere Trägheitseffekte der rotierenden Massen, berücksichtigt werden müssen.

Aufgabe der Erfindung ist es daher, eine gattungsgemäße Vorrichtung derart fortzubilden, daß sie unter solchen Betriebsbedingungen die exakte Steuerung des Sternrades so ermöglicht, daß eine definierte Halteposition der aufeinanderfolgenden Probengefäße zur Durchführung von Verfahrensschritten, wie z.B. Messungen,gewährleistet ist.

Erfindungsgemäß wird diese Aufgabe durch die Merkmale des Patentanspruchs 1 gelöst.

Der Grundgedanke der Erfindung besteht also im wesentlichen darin, die Abtastung des Sternrades zu seiner Steuerung unmittelbar an diesem selbst vorzunehmen, so daß auf zusätzliche Bauteile wie z.B. Steuerscheiben, die auch eine zusätzliche Fehlerquelle darstellen, verzichtet werden kann, wobei infolge der stufenweisen Herabsetzung der Drehfrequenz des Antriebsmotors eine präzise Einhaltung der Halteposition gewährleistet wird.

Weitere Ausgestaltungen sind weiteren Patentansprüchen zu entnehmen.

Ein Ausführungsbeispiel der erfindungsgemäßen Vorrichtung wird nun anhand von Zeichnungen näher erläutert.

Es zeigen:
- Figur 1:: eine perspektivische Prinzipdarstellung der gesamten Vorrichtung,
- Figur 2:: eine Ansicht auf einen Segmentflügel mit seiner Stirnfläche,
- Fig. 3: eine schematische Aufsicht auf das Sternrad mit zugeordneter Vorrichtung und
- Fig. 4: eine perspektivische Schemadarstellung des Meßvorganges.

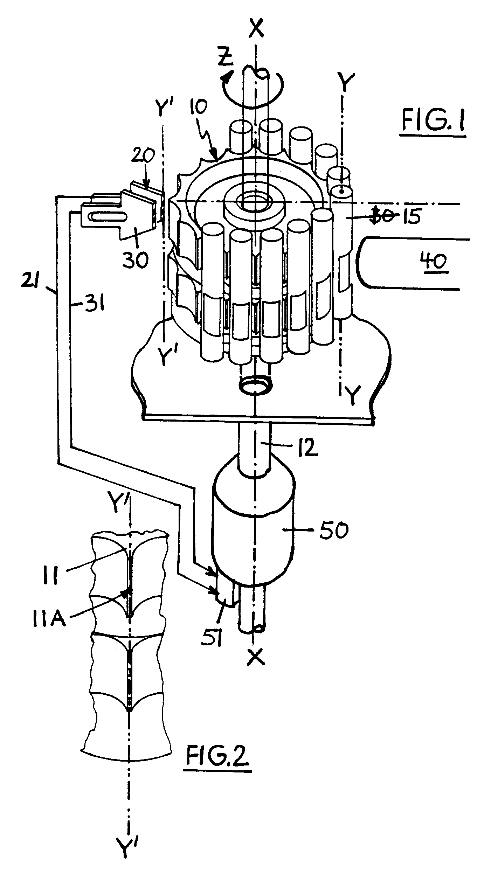

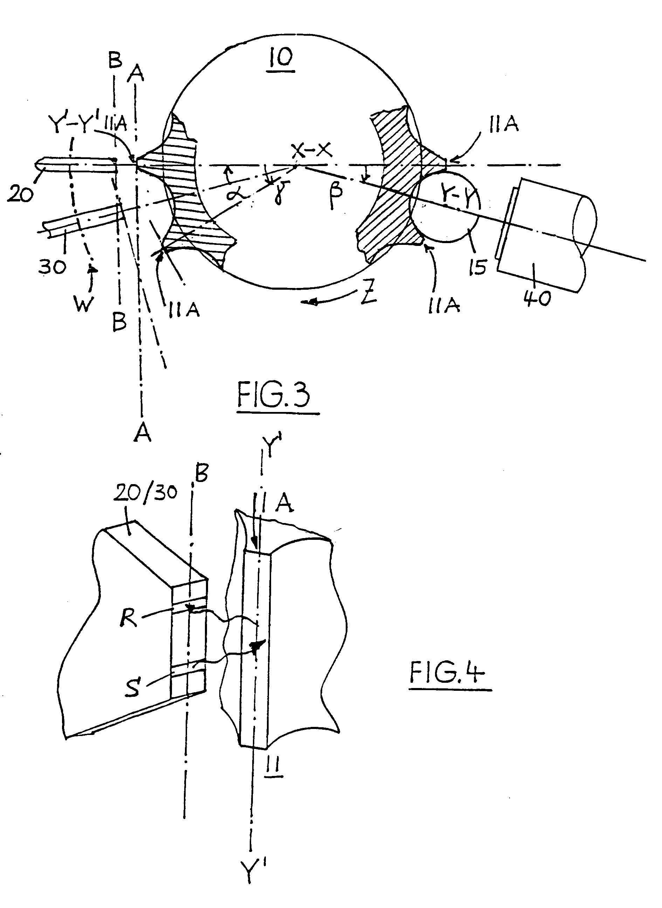

Das in den Figuren 1 und 3 dargestellte Sternrad 10 dient zum schrittweisen Transport einer Kette von Probengefäßen 15 in Richtung des Pfeiles Z (Fig. 1). Hierzu ist das Sternrad 10 auf einer Welle 12 gelagert, an der ebenfalls ein Motor 50 angreift, der die erwünschte Drehung bewirkt. Zur Erfassung und zum Transport der aneinandergeketteten Probengefäße 15 weist das Sternrad mehrere Segmente auf, die mit nach außen zeigenden Segmentflügeln 11 untereinander abgegrenzt sind, so daß ein zahnradähnlicher Eingriff dieser Segmentflügel 11 in die Zwischenräume zwischen aufeinanderfolgenden Probengefäßen 15 erfolgen kann. Derartige Sternräder sind beispielsweise in der Meßtechnik, insbesondere für medizinische Zweck verbreitet, wenn nacheinander an den aufeinanderfolgenden Probengefäßen 15 Messungen vorgenommen werden sollen. Beim dargestellten Ausführungsbeispiel ist hier eine Meßvorrichtung 40 dargestellt, die beispielsweise ein Fotomultiplayer sein kann, der zur Durchführung von Lumineszenzmessungen an dem Inhalt der Probengefäße 15 verwendet wird. Solche Meßverfahren sind im einzelnen bekannt und brauchen hier nicht besonders erläutert zu werden; von ausschlaggebender Bedeutung ist dabei lediglich, daß zu einer einwandfreien Messung eine stets gleiche relative Positionierung des Probengefäßes 15 zum Meßgerät 40 gewährleistet ist, was in der Prinzipdarstellung der Fig. 3 durch den Winkel gegenüber der Horizontalen und durch die vertikale Achse Y-Y angedeutet ist. Die Steuerung des Sternrades 10 muß also gewährleisten, daß nach jedem Transportschritt um den Winkel γ (Winkelabstand aufeinanderfolgender Segmentflügel 11) die Vertikalachse des jeweils nächsten Probengefäßes 15 wieder exakt mit der Achse Y-Y übereinstimmt, bzw. der Winkel β wieder genau eingestellt wird. Nur dann sind reproduzierbare und ggf. untereinander vergleichbare Messungen an dem Inhalt der Probengefäße 15 gewährleistet.

Um dies zu erreichen, benutzt die dargestellte Vorrichtung das Prinzip der Reflex-Lichtschranke als Sensoranordnung 20 in Verbindung mit einer speziellen räumlichen Ausbildung der Stirnkanten der Segmentfügel 11:
Diese vorderen Stirnkanten 11A sind mit einer im dargestellten Ausführungsbeispiel etwa 0,5 mm breiten reflektierenden Fläche versehen, beispielsweise entsprechend abgefräst. Diese Fläche dient zur Reflexion des Lichtsignals der Sensoranordnung 20, die (Fig. 4) im wesentlichen einen Sender S und einen Empfänger R beinhaltet. Die restliche Oberfläche des Sternrades ist nicht reflektierend, z.B. schwarz eloxiert ausgebildet.
Die Reflexionsbedingung wird demnach erfüllt sein, wenn die - wie oben beschrieben ausgebildete - Stirnkante 11A der Segmentflügel 11 (Ebene A-A) unmittelbar gegenüber der Sensoranordnung 20 sich befindet, wenn also die Ebene A-A parallel zur Ebene B-B liegt, in der sich Sender S und Empfänger R befinden. Wenn diese Bedingung erfüllt ist, wird das vom Sender S ausgesandte Licht mit maximaler Intensität in den Empfänger R reflektiert werden, d.h. die vertikale Mittellinie Y′-Y′ der gegenüberliegenden Stirnkante 11A und damit auch die einzustellende Achse Y-Y bzw. der Winkel β ist damit durch entsprechende Positionierung der Sensoranordnung 20 in der Bogenebene W (Fig. 3) vorgebbar bzw. einjustierbar: Die Reflexionsbedingung ist genau dann optimal erfüllt, wenn die Mittelachse des betreffenden Probengefäßes 15 mit der Achse Y-Y zusammenfällt.

Beim dargestellten Ausführungsbeispiel liegen die Ebenen A-A bzw. B-B tangential zum Sternrad 10. Dies ist nicht unbedingt erforderlich, solange die Ebenen A-A und B-B zueinander parallel verlaufen.

Über eine erste Steuerleitung 21 gibt bei Vorliegen der Reflexionsbedingungen die Sensoranordnung 20 ein entsprechendes Signal an eine Steuerschaltung 51 am Motor 50, um diesen anzuhalten. Je nach konstruktiver Ausgestaltung des Sternrades und der Charakteristik des Motors 50 kann es hierbei erforderlich sein, die Sensoranordnung 20 so einzujustieren (in der Ebene W), daß deren Steuerimpuls bereits kurze Zeit vor dem Erreichen der gewünschten Winkelposition des Probengefäßes 15 abgegeben wird, um der Trägheit der Anordnung Rechnung zu tragen.

Um diesen Effekt genauer zu definieren, ist beim dargestellten Ausführungsbeispiel eine zweite Sensoranordnung 30 vorgesehen, deren Funktion identisch mit der ersten Sensoranordnung 20 ist, die also ebenfalls bei vorliegender
Reflexionsbedingung über eine zweite Steuerleitung 31 ein entsprechendes Signal an die Steuerschaltung 51 des Motors 50 gibt. Die Unterschiede sind hierbei folgende:

Die zweite Sensoranordnung 30 ist gegenüber der ersten Sensoranordnung 20 um einen Zentriwinkel α entgegen der Drehrichtung des Sternrades 10 versetzt angeordnet, das heißt, daß jeder Segmentflügel 11 mit seiner vorderen Stirnkante 11A zunächst die zweite Sensoranordnung 30 passiert, bevor er bei der ersten Sensoranordnung 20 anlangt. Bei Vorliegen der Reflexionsbedingung (wie oben hinsichtlich der Sensoranordnung 20 erläutert) bei der Sensoranordnung 30 bewirkt das von dieser ausgelöste Signal in der Steuerschaltung 51 eine Reduzierung der Drehzahl des Motors 50, so daß dann der verbleibende Drehwinkel α von der betreffenden Stirnkante 11A bis zur Positionierung gegenüber der ersten Sensoranordnung 20 mit reduzierter Umfangsgeschwindigkeit zurückgelegt wird. Durch diese Zwangsführung des Motors 50 mit der "vorgeschalteten" zweiten Sensoranordnung 30 lassen sich die oben angedeuteten theoretisch möglichen Ungenauigkeiten durch Trägheitseffekte der gesamten Anordnung auf ein Minimum reduzieren, das heißt, es ist mit höchster Präzision sichergestellt, daß das Sternrad nach Eintreffen der Reflexionsbedingung bei der ersten Sensoranordnung 20 tatsächlich in einer solchen Position anhält, daß die letztlich angestrebte exakte Positionierung des Probengefäßes 15 (Achse Y-Y bzw. Winkel β) relativ zum Meßgerät 40 gewährleistet ist.

Je nach konstruktiver Ausgestaltung der gesamten Vorrichtung kann es auch sinnvoll sein, mehrere derartige "vorgeschaltete" Sensoranordnungen vorzusehen, um eine definierte Vorgabe der Motorumdrehung sicherzustellen.

## Patentansprüche

1. Vorrichtung zur Steuerung eines Sternrades zur exakten Positionierung von Probenbehältern, die in N umfangsseitig aufeinanderfolgenden Segmenten des Sternrades angeordnet und durch diese schrittweise nacheinander zur erwünschten Halteposition gefördert werden, mit einem Antriebsmotor, der das Sternrad beaufschlagt und der schrittweise gesteuert wird,
dadurch gekennzeichnet, daß die radial nach außen zeigenden Segmentflügel (11) an ihrer vorderen Stirnkante (11A) zumindest teilweise flächig und reflektierend ausgebildet sind, und daß unmittelbar gegenüber den Segmentflügeln (11) des Sternrades und um einen Zentriwinkel (α) in der Rotationsebene (W) des Sternrades (10) gegeneinander versetzt mindestens zwei Sensoranordnungen (20,30), jeweils bestehend aus Sender (S) und Empfänger (R),angeordnet sind, derart, daß jeweils bei Erreichen einer der gewünschten Halteposition entsprechenden definierten Winkelposition durch eine Stirnkante (11A) eine der Sensoranordnungen (20, 30) anspricht und ihr Ausgangssignal über eine Steuerschaltung (51) den Antriebsmotor (50) derart ansteuert, daß das Signal mindestens einer Sensoranordnung (30) die Umdrehungsgeschwindigkeit des Motors (50) reduziert und das Signal der anderen Sensoranordnung (20) den Motor (50) anhält.

2. Vorrichtung nach Anspruch 1, dadurch gekennzeichnet, daß Sender (S) und Empfänger (R) jeder Sensoranordnung (20,30) vertikal übereinander angeordnet sind.

3. Vorrichtung nach Anspruch 1 und 2, dadurch gekennzeichnet, daß die vordere Stirnkante (11A) der Segmentflügel (11) in der Tangentialebene (A-A) am Umfang des Sternrades (10) liegt, und daß die Sender/Empfänger (S/R) in ihrer jeweiligen Ansprechposition in hierzu paralleler Ebene (B-B) liegen.

4. Vorrichtung nach Anspruch 3, dadurch gekennzeichnet, daß der Zentriwinkel (α) geringer ist als der Winkelabstand (γ) benachbarter Segmentflügel (11).

5. Vorrichtung nach Anspruch 1, dadurch gekennzeichnet, daß die Sensoranordnung (20,30) im nicht von Probengefäßen (15) beaufschlagten Umfangsbereich des Sternrades (10) angeordnet ist.

6. Vorrichtung nach Anspruch 1, dadurch gekennzeichnet, daß die Sensoranordnung (20,30) eine optische Reflex-Lichtschranke ist.

7. Vorrichtung nach einem der vorhergehenden Ansprüche, dadurch gekennzeichnet, daß die Sensoranordnungen in der Rotationsebene (W) des Sternrades (10) verschiebbar, insbesondere justierbar gelagert sind.

## Claims

1. Device for controlling a star-shaped wheel for the exact positioning of sample containers, which are disposed in N segments of the star-shaped wheel succeeding one another at the peripheral edge and are conveyed by said segments stepwisely one after the other to the desired stop position, utilising a driving motor, which actuates the star-shaped wheel and is controlled stepwisely, characterised in that the radially outwardly orientated segmental vanes (11) are adapted, at their front edge (11A), to be at least partially planar and reflective, and in that at least two sensor arrangements (20, 30), each comprising transmitter (S) and receiver (R), are disposed in an offset manner relative to each other directly opposite the segmental vanes (11) of the star-shaped wheel and about a sector angle (α) in the rotational plane (W) of the star-shaped wheel (10), in such a manner that one of the sensor arrangements (20, 30) responds each time a specific angular position, corresponding to the desired stop position, is attained by a front edge (11A), and its output signal triggers the driving motor (50), via a control circuit (51), such that the signal of at least one sensor arrangement (30) reduces the speed of rotation of the motor (50), and the signal of the other sensor arrangement (20) stops the motor (50).

2. Device according to claim 1, characterised in that transmitter (S) and receiver (R) of each sensor arrangement (20, 30) are disposed vertically above each other.

3. Device according to claims 1 and 2, characterised in that the front edge (11A) of the segmental vanes (11) lies in the tangential plane (A-A) on the periphery of the star-shaped wheel (10), and in that, in their respective operating positions, the transmitters/receivers (S/R) lie in plane (B-B) parallel to said positions.

4. Device according to claim 3, characterised in that the sector angle (α) is smaller than the angular spacing (γ) between adjacent segmental vanes (11).

5. Device according to claim 1, characterised in that the sensor arrangement (20, 30) is disposed in the peripheral region of the star-shaped wheel (10) not occupied by sample containers (15).

6. Device according to claim 1, characterised in that the sensor arrangement (20, 30) is an optical reflex light barrier.

7. Device according to one of the preceding claims, characterised in that the sensor arrangements are displaceably, more especially adjustably, mounted in the rotational plane (W) of the star-shaped wheel (10).

## Revendications

1. Dispositif de commande d'une roue étoilée pour le positionnement exact de récipients d'échantillons, disposés dans N segments périphériques et successifs de la roue étoilée, par lesquels ils sont transportés pas à pas, les uns après les autres, en direction de la position d'arrêt voulue, avec un moteur de commande, qui attaque la roue étoilée et est commandé pas à pas, caractérisé en ce que les ailes de segments (11), orientées dans le sens radial externe, ont une réalisation réfléchissante et plane, en partie du moins, sur leur arête frontale avant (11A), et en ce que deux agencements de capteurs (20, 30) au moins, respectivement composés d'un émetteur (S) et d'un récepteur (R), sont disposés directement en vis-à-vis des ailes de segments (11) de la roue étoilée, avec un déport mutuel d'un angle au centre (α) dans le plan de rotation (W) de la roue étoilée, de sorte que, lorsqu'une position angulaire définie, correspondante à la position d'arrêt voulue, est atteinte par une arête frontale (11A), l'un des agencements de capteurs (20, 30) répond, et son signal de sortie attaque le moteur de commande (50) par l'intermédiaire d'un circuit de réglage (51), de manière que le signal de l'un des agencements de capteurs (30), au moins, réduit la vitesse de rotation du moteur (50), et que le signal de l'autre agencement de capteur (20) arrête le moteur (50).

2. Dispositif suivant la revendication 1, caractérisé en ce que les émetteurs (S) et récepteurs (R) de chaque agencement de capteur (20, 30) sont superposés dans le sens vertical.

3. Dispositif suivant les revendications 1 et 2, caractérisé en ce que l'arête frontale avant (11A) des ailes de segments (11) se situe dans le plan tangentiel (A-A) sur le pourtour de la roue étoilée (10), et en ce que les émetteurs/récepteurs (S/R), dans leur position de réponse respective, se situent dans un plan (B-B) parallèle au plan précité.

4. Dispositif suivant la revendication 3, caractérisé en ce que l'angle au centre (α) est inférieur à la distance angulaire (γ) d'ailes de segments limitrophes (11).

5. Dispositif suivant la revendication 1, caractérisé en ce que l'agencement de capteur (20, 30) est disposé dans la zone périphérique de la roue étoilée (10), non sollicitée par des récipients d'échantillons (15).

6. Dispositif suivant la revendication 1, caractérisé en ce que l'agencement de capteur (20, 30) est une barrière lumineuse réflexe.

7. Dispositif suivant l'une quelconque des revendications précédentes, caractérisé en ce que les agencements de capteurs sont montés avec une possibilité de déplacement, d'ajustement notamment, dans le plan de rotation (W) de la roue étoilée (10).
